# EUROPÄISCHE PATENTSCHRIFT

(11) **EP 2 215 884 B1**
(45) Veröffentlichungstag und Bekanntmachung des Hinweises auf die Patenterteilung: **11.09.2013**
(21) Anmeldenummer: 07846887.3
(22) Anmeldetag: 26.11.2007
(51) Int. Cl.: H04W 4/00, G06K 7/10

(54) **VERFAHREN ZUM AUSLESEN DER AUF EINER CHIPKARTE IMPLEMENTIERTEN APPLIKATIONEN**
METHOD FOR READING THE APPLICATIONS IMPLEMENTED ON A CHIP CARD
PROCÉDÉ POUR LIRE LES APPLICATIONS MISES EN OEUVRE SUR UNE CARTE À PUCE

(43) Veröffentlichungstag der Anmeldung: 11.08.2010
(73) Patentinhaber: Gemalto M2M GmbH, 81541 München (DE)
(72) Erfinder: BLUM, Ronald, 13591 Berlin (DE); KLAPPER, Christian, 16552 Schildow (DE)
(74) Vertreter: Eisenführ, Speiser & Partner
(86) Internationale Anmeldenummer: PCT/EP2007/010362
(87) Internationale Veröffentlichungsnummer: WO 2009/068056

(56) Entgegenhaltungen:
- EP-A- 1 308 805
- WO-A-03/105508
- "Digital cellular telecommunications system (Phase 2+); Universal Mobile Telecommunications System (UMTS); AT command set for User Equipment (UE) (3GPP TS 27.007 version 7.4.0 Release 7); ETSI TS 127 007" ETSI STANDARDS, LIS, SOPHIA ANTIPOLIS CEDEX, FRANCE, Bd. 3-T2, Nr. V7.4.0, 1. Juni 2007 (2007-06-01), XP014038038 ISSN: 0000-0001

## Beschreibung

Die Erfindung betrifft ein Verfahren zum Auslesen der auf einer Chipkarte implementierten Applikationen.

In mobilen Endgeräten wie Mobiltelefonen, Personal Digital Assistants, Funkmodems, Funkmodulen etc., die nach dem GSM Mobilfunkstandard (Global System for Mobile Communication) bzw. dem UMTS Mobilfunkstandard (Universal Mobile Telecommunications System) arbeiten, werden zur Identifizierung des Nutzers des mobilen Endgerätes im Mobilfunknetz Chipkarten verwendet. Auf den Chipkarten sind benutzerrelevante Daten gespeichert und der Nutzer muss sich vor der Nutzung von Mobilfunkdiensten gegenüber der Chipkarte und damit mittelbar auch gegenüber dem Mobilfunknetz ausweisen, was in der Regel durch Eingabe einer PIN-Nummer im mobilen Endgerät geschieht. Diese Chipkarten sind bezogen auf den GSM-Mobilfunkstandard als SIM-Chipkarten (Subscriber Identity Module-Chipkarten) bekannt. Mobile Endgeräte, die sowohl nach dem GSM-Mobilfunkstandard und dem UMTS-Mobilfunkstandard (Universal Mobile Telecommunications Standard) betrieben werden, benötigen zur Identifizierung des Nutzers für die jeweiligen vom Mobilfunknetz angebotenen Dienste eine als UICC-Chipkarte (Universal Integrated Circuit Chip-Chipkarte) bekannte Chipkarte. Die genannten Chipkarten werden zumeist in das mobile Endgerät eingesteckt, damit die Nutzer der mobilen Endgeräte Telefon- und Datendienste des Mobilfunkanbieters verwenden können. Ist das mobile Endgerät ein Funkmodul wird die Chipkarte in das Funkmodul in der Regel nicht eingesteckt, ist aber mit dem Funkmodul elektrisch verbunden.

Die UICC-Chipkarte umfasst eine sogenannte GSMS1MApplikation, mit der der Nutzer die Dienste des GSM-Mobilfunknetzes nutzen kann. Darüber hinaus umfasst die UICC Chipkarte eine sogenannte US1M-Applikation (Universal Subscriber Identity Module-Applikation) mit der der Nutzer die Dienste des UMTS-Mobilfunknetzes nutzen kann. Darüber hinaus kann die UICC-Chipkarte weitere Applikationen umfassen, von denen hier die ISIM-Applikation (IP Multimedia Service Identity Module-Applikation) herausgestellt werden soll, mit der der Nutzer Multimedia-Dienste des IM3 (IP Multimedia Subsystem) nutzen kann. Die mehreren auf der UICC-Chipkarte gespeicherten Applikationen können gleichzeitig zur Ausführung gebracht werden, d.h. der Nutzer des mobilen Endgerätes kann gleichzeitig Dienste des GSM-Mobilfunknetzes, des UMTS-Mobilfunknetzes und des IP Multimedia Subsystems nutzen.

Aufbau und Funktion der UICC-Chipkarte sind dem Fachmann bekannt, so dass von weiteren Erläuterungen abgesehen wird.

Für verschiedenste Zwecke muss von Herstellern von mobilen Endgeräten geprüft werden, welche der genannten Applikationen auf der UICC-Chipkarte gespeichert sind.

Aus dem Dokument WO 03/105508 A ist ein Verfahren zum Auslesen der auf einer Chipkarte gespeicherten Daten bekannt. Die Chipkarte ist mit einem Funkmodul verbunden, welches wiederum über eine Datenverbindung mit einer Abfrageeinheit verbunden ist. Die Abfrageeinheit versendet über eine logische Schnittstelle ein AT-Kommando an das Funkmodul, welches dieses Kommando in eine Meldung eines anderen Datenformats umsetzt und die umgesetzte Meldung an die Chipkarte weiterleitet. Die Chipkarte sendet eine Antwort auf dem gleichen Weg an das Funkmodul, welches wiederum die Daten über die logische Schnittstelle an die Abfrageeinheit zurücksendet.

Es ist die Aufgabe der vorliegenden Erfindung ein einfaches Verfahren zum Auslesen von auf einer Chipkarte, die über ein Funkmodul mit einer Abfrageeinheit verbunden ist, implementierten Applikationen anzugeben, welches eine Erkennung von Betriebsfehlern von Chipkarten beim Betrieb in mobilen Endgeräten, insbesondere Funkmodulen beschleunigt.

Die Aufgabe wird durch ein Verfahren zum Auslesen der auf einer Chipkarte implementierten Applikationen gelöst,
a) bei dem die Abfrageeinheit ein AT-Kommando, mit dem das Vorhandensein der auf der Chipkarte implementierten Applikationen abgefragt wird, an das Funkmodul versendet,
b) das Funkmodul das AT-Kommando in eine Meldung eines anderen Datenformates umsetzt und die umgesetzte Meldung an die Chipkarte versendet,
c) die Chipkarte eine Antwortmeldung hinsichtlich der auf der Chipkarte implementierten Applikationen an das Funkmodul zurücksendet,
d) das Funkmodul die Antwortmeldung auswertet und in ein anderes Datenformat umsetzt und die umgesetzte Antwortmeldung an die Abfrageeinheit zurücksendet wobei die Meldung hinsichtlich der auf der Chipkarte (UICC) implementierten Applikationen (GSMSIM, USIM, ISIM) in einem Speicher des Funkmoduls (FM) protokolliert wird.

Die Eingabe eines neu geschaffenen AT-Kommandos in eine Abfrageeinheit ermöglicht in einfacher Weise aus einer Chipkarte, die über ein Funkmodul mit einer Abfrageeinheit verbunden ist, sämtliche der auf der Chipkarte gespeicherten Applikationen, hier GSMSIM-Applikation, USIM-Applikation, ISIM-Applikation und eventuell weitere Applikationen, auszulesen.

Weiterbildungen der Erfindung ergeben sich aus den Unteransprüchen.

In vorteilhafter Weise wird das Verfahren zum Auslesen der auf einer Chipkarte implementierten Applikationen dadurch weitergebildet, dass die Chipkarte als eine Universal Integrated Circuit Card ausgebildet ist. Dadurch kann das Verfahren für die in der Praxis in mobilen Endgeräten zur Nutzung von Diensten des Mobilfunknetzes benutze UICC-Chipkarte verwendet werden.

In vorteilhafter Weise umfasst das erfindungsgemäße Verfahren zum Auslesen der auf einer Chipkarte implementierten Applikationen, dass die Meldung hinsichtlich der auf der Chipkarte implementierten Applikationen in einem Speicher des Funkmoduls protokolliert wird. Diese Protokollierung kann die Suche nach bzw. Erkennung von Betriebsfehlern von Chipkarten beim Betrieb in mobilen Endgeräten, insbesondere Funkmodulen, beschleunigen.

Weitere Vorteile der Erfindung ergeben sich aus der folgenden Beschreibung, welche in Verbindung mit der beigefügten Zeichnung die Erfindung anhand von einem Ausführungsbeispiel erläutert.

Dabei zeigt in schematischer Darstellung die

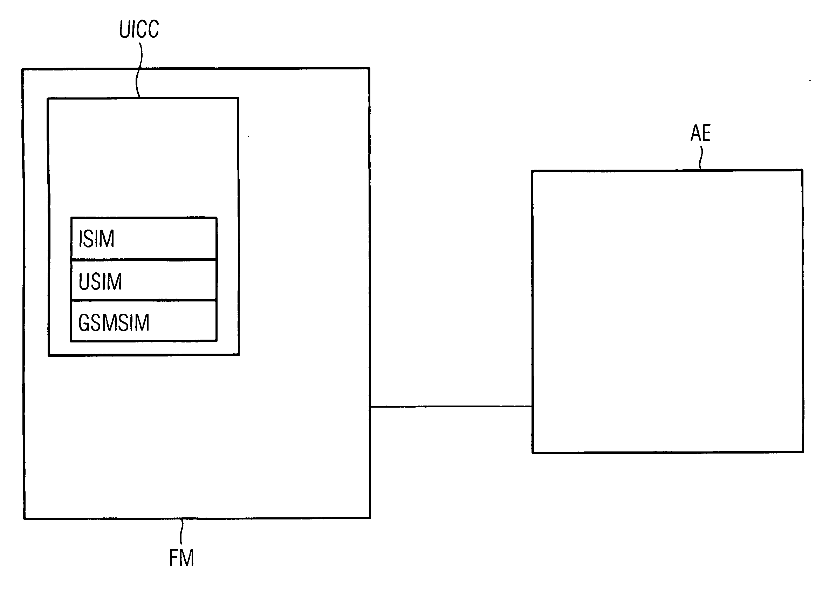

FIG 1 eine Chipkarte mit auf der Chipkarte gespeicherten Applikationen, die über ein Funkmodul mit einer Abfrageeinheit verbunden ist.

Die Figur 1 zeigt eine Chipkarte UICC mit auf der Chipkarte UICC gespeicherten Applikationen GSMSIM, USIM, ISIM, die über ein Funkmodul FM mit einer Abfrageeinheit AE verbunden ist.

Die Chipkarte UICC ist vorzugsweise als UICC-Chipkarte UICC ausgebildet. Auf der Chipkarte sind drei verschiedene Applikationen GSMSIM, USIM, ISIM gespeichert. Die Chipkarte UICC ist hier als Bestandteil des Funkmoduls FM offenbart und mit diesem mechanisch und elektrisch verbunden. Sie könnte auch außerhalb der räumlichen Grenzen des Funkmoduls FM angeordnet und mit diesem elektrisch verbunden sein (hier nicht gezeigt). Mit dem Funkmodul FM und damit mittelbar auch mit der Chipkarte UICC ist eine Abfrageeinheit AE verbunden. Die Abfrageeinheit AE ist in der Regel ein Computer. Auch könnte die Abfrageeinheit AE mit dem Funkmodul FM eine bauliche Einheit bilden und beispielsweise ein Programm umfassen, welches eigenständig das AT-Kommando nach definierten Vorgaben erzeugt (hier nicht gezeigt).

Das Funkmodul FM versteht von der Abfrageeinheit AE empfangene sogenannte AT-Kommandos. Diese AT-Kommandos werden zum Konfigurieren und Parametrieren von Funkmodulen FM verwendet und sind in der Fachwelt bekannt. Üblicherweise werden diese AT-Kommandos in verschiedene Klassen eingeteilt, einen Basiskommandosatz, einen erweiterten Kommandosatz, einen speziellen Kommandosatz und einen Registerkommandosatz. Das Funkmodul FM regiert auf die Empfang dieser AT-Kommandos, die beispielsweise durch einen Nutzer in die Abfrageeinheit AE eingegeben werden, durch Umsetzung der Befehle und / oder Ausgabe von Antwortmeldungen an die Abfrageeinheit AE. Antwortmeldungen können auf einer Anzeigeeinheit der Abfrageeinheit AE auch im Klartext dargestellt werden.

Das Funkmodul FM setzt die von der Abfrageeinheit AE empfangenen AT-Kommandos zur Ermittlung der auf der Chipkarte UICC implementierten Applikationen GSMSIM, USIM, ISIM beispielsweise in dem Fachmann bekannte Application Protocol Data Units (APDUs) um und versendet Daten dieses Datenformates an die Chipkarte UICC. Die Antwortdaten der Chipkarte UICC im Datenformat von Antwort Application Protocol Data Units (Antwort-APDUs) werden von dem Funkmodul FM ausgewertet. Danach werden die Auswertungsergebnisse bezüglich der Informationen der Chipkarte UICC in ein für die Abfrageeinheit AE verständliches Datenformat umgesetzt an die Abfrageeinheit AE zurückgesendet.

Die Abfrage, welche Applikationen GSMSIM, USIM, ISIM auf der Chipkarte UICC implementiert sind, wird von der Abfrageeinheit AE durch das AT-Kommando AT^SAID eingeleitet.

Mit dem Testkommando AT^SAID? kann von der Abfrageeinheit AE geprüft werden, ob das Funkmodul FM dieses AT-Kommando ausführen kann. Dieses wird vom Funkmodul FM durch das Versenden einer OK-Antwortmeldung an die Abfrageeinheit AE bestätigt. Wird das AT-Kommando vom Funkmodul FM nicht unterstützt, wird vom Funkmodul FM eine ERROR-Antwortmeldung an die Abfrageeinheit AE gesendet.

Durch die Eingabe des neu geschaffenen Kommandos AT^SAID in die Abfrageeinheit AE wird das Funkmodul FM gezielt abgefragt, welche Applikationen GSMSIM, USIM, ISIM auf der Chipkarte UICC implementiert sind. Das Funkmodul FM ermittelt nun diese Informationen von der Chipkarte UICC und antwortet an die Abfrageeinheit AE, im Fall des Vorhandenseins aller Applikationen GSMSIM, USIM, ISIM mit einer Meldung "GSMSIM is implemented", "USIM is implemented", "ISIM is implemented".

Wäre nur die USIM-Applikation auf der Chipkarte UICC implementiert, würde die Antwortmeldung nur "USIM is implemented" lauten.

Wäre ausschließlich eine neue Applikation auf der Chipkarte UICC implementiert, würde die Antwortmeldung "XXX is implemented" lauten, wobei in XXX der nach jeweilig geltender technischer Spezifikation alphanumerische Code der neuen Applikation enthalten ist.

Durch die Eingabe von AT-Kommandos kann das Vorhandensein verschiedener Applikationen GSMSIM, USIM, ISIM auf der Chipkarte UICC auf einfache Weise ermittelt und an der Abfrageeinheit AE dargestellt werden. Auf diese Weise können Fehler beim Betrieb von Chipkarten UICC in Funkmodulen FM leicht ermittelt werden und eine Fehlerbeseitigung kann erfolgen. Eine Protokollierung der auf der Chipkarte UICC implementieren Applikationen GSMSIM, USIM, ISIM in einem Speicher des Funkmoduls FM erleichtert die Fehlererkennung und -behebung. Dieser Test könnte bei jeder Inbetriebnahme des Funkmoduls FM erfolgen.

Die Erfindung ist nicht auf das spezielle Ausführungsbeispiel beschränkt, sondern schließt weitere nicht explizit offenbarte Abwandlungen mit ein, solange von dem Kern der Erfindung Gebrauch gemacht wird.

Insbesondere könnten die einzugebenden Kommandos eine andere Syntax besitzen oder die ausgegebenen Antwortmeldungen im Wortlaut abweichen. Auch kann es innerhalb eines Kommando-/Antwortzyklus (von Eingabe des ersten AT-Kommandos zur Abfrage der auf der Chipkarte UICC gespeicherten Applikationen GSMSIM, USIM, ISIM in der Abfrageeinheit AE bis zum Empfang der Antwortmeldung über gespeicherte Applikationen GSMSIM, USIM, ISIM durch die Abfrageeinheit AE) erforderlich sein, weitere Kommandos einzugeben bzw. (Zwischen)Antwortmeldungen zu empfangen.

## Patentansprüche

1. Verfahren zum Auslesen der auf einer Chipkarte (UICC) implementierten Applikationen (GSMSIM, USIM, ISIM), wobei die Chipkarte (UICC) mit einem Funkmodul (FM) verbunden ist, wobei das Funkmodul (FM) mit einer Abfrageeinheit (AE) verbunden ist,
a) wobei die Abfrageeinheit (AE) ein AT-Kommando, mit dem das Vorhandensein der auf der Chipkarte (UICC) implementierten Applikationen (GSMSIM, USIM, ISIM) abgefragt wird, an das Funkmodul (FM) versendet,
b) das Funkmodul (FM) das AT-Kommando in eine Meldung eines anderen Datenformates umsetzt und die umgesetzte Meldung an die Chipkarte (UICC) versendet,
c) wobei Chipkarte (UICC) eine Antwortmeldung hinsichtlich der auf der Chipkarte (UICC) implementierten Applikationen (GSMSIM, USIM, ISIM) an das Funkmodul (FM) zurücksendet,
d) das Funkmodul (FM) die Antwortmeldung auswertet und in ein anderes Datenformat umsetzt und die umgesetzte Antwortmeldung an die Abfrageeinheit (AE) zurücksendet, wobei die Meldung hinsichtlich der auf der Chipkarte (UICC) implementierten Applikationen (GSMSIM, USIM, ISIM) in einem Speicher des Funkmoduls (FM) protokolliert wird.

2. Verfahren zum Auslesen der auf einer Chipkarte (UICC) implementierten Applikationen (GSMSIM, USIM, ISIM) gemäß Patentanspruch 1,
**dadurch gekennzeichnet, dass**
die Chipkarte (UICC) als eine Universal Integrated Circuit Card ausgebildet ist.

## Claims

1. Method for reading out the applications (GSMSIM, USIM, ISIM) implemented on a chip card (UICC), wherein the chip card (UICC) is connected to a radio module (FM), wherein the radio module (FM) is connected to a query unit (AE),
a) wherein the query unit (AE) sends to the radio module (FM) an AT command with which the presence of the applications (GSMSIM, USIM, ISIM) implemented on the chip card (UICC) is queried,
b) the radio module (FM) converts the AT command into a message of a different data format and sends the converted message to the chip card (UICC),
c) wherein the chip card (UICC) sends back to the radio module (FM) a response message regarding the applications (GSMSIM, USIM, ISIM) implemented on the chip card (UICC),
d) the radio module (FM) evaluates the response message and converts it into a different data format and sends the converted response message back to the query unit (AE),
wherein the message regarding the applications (GSMSIM, USIM, ISIM) implemented on the chip card (UICC) is logged in a memory of the radio module (FM).

2. Method for reading out the applications (GSMSIM, USIM, ISIM) implemented on a chip card (UICC) according to claim 1,
**characterised in that**
the chip card (UICC) is configured as a universal integrated circuit card.

## Revendications

1. Procédé de lecture des applications (GSMSIM, USIM, ISIM) mises en oeuvre sur une carte (UICC) à puce, la carte (UICC) à puce étant reliée à un module (FM) radio, le module (FM) radio étant relié à une unité (AE) d'interrogation,
a) dans lequel l'unité (AE) d'interrogation envoie au module (FM) radio un ordre AT interrogeant sur la présence des applications (GSMSIM, USIM, ISIM) mises en oeuvre sur la carte (UICC) à puce,
b) le module (FM) radio transforme l'ordre en un message d'un autre format de données et envoie le message transformé à la carte (UICC) à puce,
c) la carte (UICC) à puce renvoie au module (FM) radio un message de réponse concernant les applications (GSMSIM, USIM, ISIM) mises en oeuvre sur la carte (UICC) à puce,
d) le module (FM) radio exploite le message de réponse et le transforme en un autre format de données et renvoie le message de réponse transformé à l'unité (AE) d'interrogation, le message concernant les applications (GSMSIM, USIM, ISIM) mises en oeuvre sur la carte (UICC) à puce étant enregistré dans une mémoire du module (FM) radio.

2. Procédé de lecture des applications (GSMSIM, USIM, ISIM) mises en oeuvre sur une carte (UICC) à puce suivant la revendication 1,
**caractérisé en ce que**
la carte (UICC) à puce est sous la forme d'une Universal Integrated Circuit Card.
